**Europäisches Patentamt**

(19) **European Patent Office**

**Office européen des brevets**

(11) Publication number: **0 135 331**
**A2**

(12) # EUROPEAN PATENT APPLICATION

(21) Application number: **84305298.6**

(22) Date of filing: **03.08.84**

(51) Int. Cl.⁴: **G 06 F 11/00**

(30) Priority: **19.08.83 US 524662**

(43) Date of publication of application:
**27.03.85 Bulletin 85/13**

(84) Designated Contracting States:
**AT BE CH DE FR GB IT LI NL SE**

(71) Applicant: **K-TRON INTERNATIONAL, INC.**
**7975 N. Hayden Road**
**Scottsdale Arizona 85260(US)**

(72) Inventor: **Bullivant, Kenneth W.**
**c/o K-Tron Int., Inc. 7975 N. Hayden Road**
**Scottsdale Arizona 85260(US)**

(74) Representative: **Daley, Michael John et al,**
**F.J. CLEVELAND & COMPANY 40/43 Chancery Lane**
**London, WC2A 1JQ(GB)**

(54) **Liquid crystal displays checking system and technique.**

(57) There is disclosed a system and technique for providing an indication of an error in the driving circuitry of a liquid crystal display. An alternating current generator is coupled to drive the backplane of an LCD display and also coupled through gating circuits to drive the individual segment electrodes in response to data which individually controls each of the segments of the LCD display. The alternating current source is provided to the backplane of the LCD through an EXCLUSIVE-OR gate which has as a second input a control signal which operates to invert the sense of the backplane drive voltage in accordance with a predetermined control scheme under the control of a microprocessor. At the same time, the microprocessor programming is configured to invert data and is used to control the individual segments in a cyclic manner so that the inverted data corresponds to inversion in the backplane drive signal. As long as the driving circuit elements function in a proper manner, the simultaneous inversion of the segment drive signals and the backplane signal causes the LCD to operate in a normal fashion. However, if the internal operation of the drive circuitry fails such that the data does not change as required by the cyclic inversion process the effected segment will blink on and off indicating a malfunction in the driving circuitry.

./...

Croydon Printing Company Ltd.

FIG 2

# LIQUID CRYSTAL CHECKING SYSTEM AND TECHNIQUE

## BACKGROUND OF THE INVENTION

The present invention relates to electronic error detecting circuitry, and more particularly, to a system and technique for detecting internal malfunctions of the driving circuitry for LCD displays.

Liquid crystal displays are well known in the prior art and are used in various devices to provide a highly reliable, low cost, compact, readable and low power dissipation display. Such devices are used, for example, to provide the output display for weighing scales and similar devices because of the above-mentioned advantages. In weighing applications, it is particularly important that any failures of the display or driving circuitry can be readily ascertained in order to avoid inaccurate weights or charges based on those weights. In many European countries, in particular, the laws are particularly stringent and require that any single failure which is likely to occur in a display system will not result in an erroneous but apparently legitimate reading.

As is known, the characters of a conventional LCD display typically have seven segments which are individually energized to form numerals or letters to provide a display of weight or other message in response to control and driving circuitry. It will be apparent that the undesired appearance or disappearance of a single segment of the typical seven segment construction, may, for example, convert a one to a seven or vice versa. Such an operation would obviously be undesirable and much of the prior art has been directed to detecting or preventing the occurrence of such a condition.

By way of example, various error detecting and monitoring devices are known in the prior art for use with LCD and similar displays, and are exemplified by U.S. Patent Nos. 4,242,677; 4,247,852; 4,301,450;

- 3 -

0135331

4,307,392; and 3,753,226. As will be appreciated, each of the above known and similar techniques attempt to insure that the output display is free of errors or, if not, the presence of errors will be detected and indicated. Many such prior schemes are successful in addressing problems of detecting a failure when the failure is due to open connections in the LCD package itself or to an accidental short circuit which may occur from one segment to another or to other points within the circuitry. However, these same techniques are not directed to the somewhat less likely possiblity of a malfunction occuring within the driving circuitry itself which causes individual segment drive outputs to remain in an improper state.

In addition to the above inability to detect certain errors, prior art circuits have also been complex and required substantial modifications and external circuitry to provide the error detection and monitoring. In many environments, it is critical that the cost and complexity be substantially reduced in order to provide acceptance and widespread use of the device. It is also necessary that the circuits used to provide the error checking and monitoring are compatible with the construction of the LCD display and driving circuits and are themselves of sufficient reliability to justify incorporation into a product.

When using LCD displays, the driving circuitry must be constructed to provide an AC driving of the display segments in order to avoid breakdown of the liquid crystal due to DC current effects. While the techniques and implementations of AC drive are well known in the art, as exemplified by U.S. Patent Nos. 4,392,129; 4,393,379; and 4,196,432, any technique which attempts to monitor the LCD circuitry for errors, must also be compatible with the AC driving circuitry. Accordingly, there is a need for systems and techniques which are capable of detecting errors in the output displays of LCD devices which may be easily implemented with conventional technology yet be compatible with the specific needs and driving requirements of LCD displays.

In accordance with the above, the present invention has been developed to overcome the specific shortcomings of the above known and similar techniques and to provide a low cost detection circuit which provides and indication of errors and malfunctions in the internal driving circuitry of LCD displays.

## SUMMARY OF THE INVENTION

In accordance with the present invention, the driving circuitry of an LCD display is coupled to receive and load data from a mircroprocessor which will provide the data outputs necessary to control energization of the individual segment electrodes of a typical LCD display. The serial data input, clocking and loading of the data into conventional drive circuitry is controlled by a conventionally-programmed microprocessor system and coordinated with the drive of the backplane of the LCD display by a square wave generator. The square wave generator and a control output are additionally coupled to an EXCLUSIVE-OR gate which provides its output as the drive signal to the backplane of the liquid crystal display. The microprocessor programming is then configured to control the serial data input to shift registers of the driving circuit such that the data is cyclicly inverted. At the same time, the same microprocessor program provides the control signal to the EXCLUSIVE-OR gate to invert the sense of the backplane drive signal in coordination with the inversion of the data for the drive of the segment electrodes. As long as each of the elements of the driving circuitry are functioning properly in driving the segment electrodes, the inversion of the backplane signal and the inversion of the segment drive signals in the cyclic manner will produce the normal output display on the LCD. If, however, the output from a latch register of the driving circuitry fails to change data as required by the cyclic inversion process, the segment corresponding to the failed latch register will blink on and off due to the cyclic inversion process. This blinking will indicate an error in the driving circuitry and alert an operator to that error.

It is therefore a feature of the invention to provide a low cost error detection circuit for monitoring LCD displays.

It is another feature of the invention to provide an error detection circuit of less complex construction which can detect errors in the segment electrode drive of LCD displays.

Yet another feature of the invention is to provide an LCD driving and display system which will provide an indication of an error in the internal driving circuitry of the system.

Still another feature of the invention is to provide a microprocessor controlled LCD driving and display system which will provide an indication of an error in the driving circuitry by a flashing segment electrode.

Still another feature of the invention is to provide an error detection circuit for use in a microprocessor controlled LCD drive system which employs an EXCLUSIVE-OR gate to invert the backplane drive signal in a cyclic manner.

Still another feature of the invention is to provide a microprocessor controlled LCD drive system which cyclicly inverts the data in a latch register of the drive circuitry and the backplane drive signal to provide an error indication when the latch data fails to change data.

These and other advantages and novel features of the invention will become apparent from the following detailed description when considered with the accompanying drawings wherein:

## BRIEF DESCRIPTION OF THE DRAWINGS

Fig. 1 is a schematic block diagram of a conventional microprocessor controlled drive system for an LCD display; and

Fig. 2 is a schematic block diagram of a microprocessor controlled LCD drive system with error detection in accordance with the present invention.

## DETAILED DESCRIPTION OF A PREFERRED EMBODIMENT

Referring now to the drawings, wherein like numerals are used to refer to like elements throughout, there is disclosed a microprocessor controlled LCD drive system as is known in the prior art. The construction and operation of such systems are well known and are used to drive LCD displays in a typical manner. The construction and operation of both the LCD's and the drive circuits are generally well known and will only be described with a detail herein necessary to understand the construction and operation of the present invention. Reference may be made, for example to the article entitled "Consider Fieldeffect LCD's for your Display Applications" by Kenneth J. Richardson in the October 5, 1977 edition of EDN, for an understanding of the construction and operation of a typical LCD. Also, while the invention is described with particular reference to its implementation in an LCD system, it is also applicable to other systems of simliar construction, such as thin-film electroluminescent (TFEL) displays.

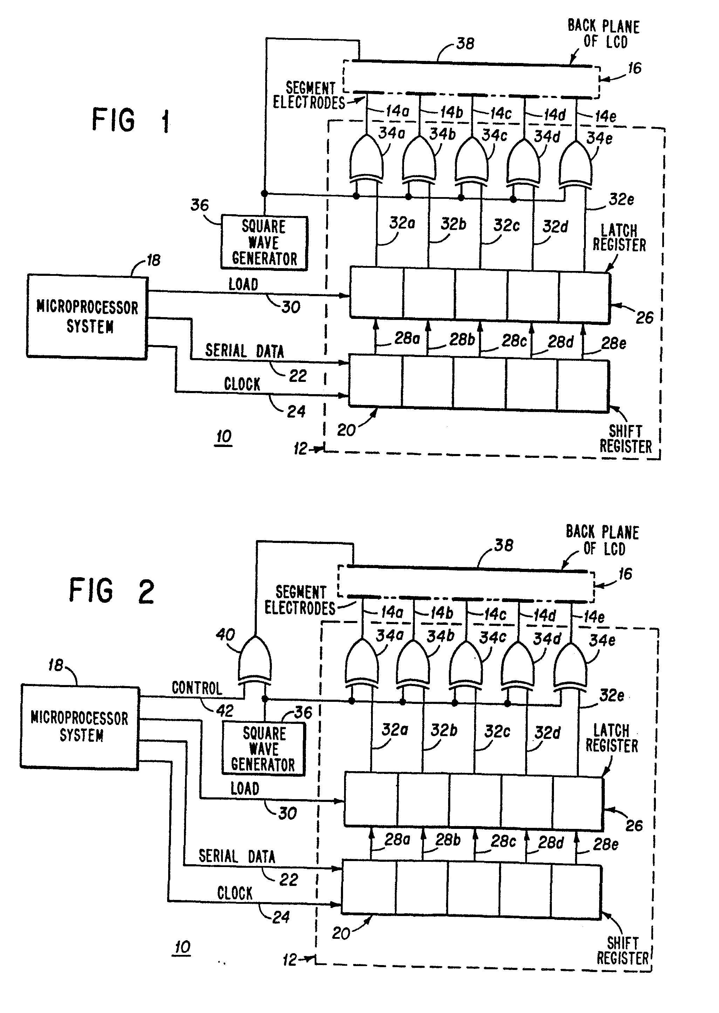

Turning first to Figure 1, there is shown a typical microprocessor controlled driving system for an LCD display. A system 10 includes a signal electrode drive circuit 12 which provides outputs on lines 14a-14e to energize the individual segment electrodes of an LCD device 16. The LCD drive circuit 12 is a typical drive circuit for a non-multiplexed LCD which uses a shift register to receive serial data from a microprocessor 18. The drive circuitry 12 may be for example, a serial input LCD driver HLCD 0438A as maufactured by Hughes Aircraft Co. and which includes a shift register 20 which receives serial input from microprocessor 18 over data line 22 and is driven by a clock signal from the microprocessor over line 24.

The drive circuitry 12 further includes a latch register 26 which is loaded under the control of the microprocessor 18 over line 30 to receive in parallel over lines 28a-28e the data stored following input over line 22. The latch register in turn provides its stored outputs over lines 32a-32e as one input to each of the EXCLUSIVE-OR gates 34a-34e, respectively. A second input of each of the EXCLUSIVE-OR gates 34a-34e is coupled to receive the square wave output of the square wave generator 36 which is simultaneously coupled to provide its square wave to the backplane 38 of the LCD 16.

As will be understood by reference to the drawing of Fig. 1, the microprocessor 18 provides for the serial input of data over line 22 in response to the clock over line 24 to the shift register 20. For each update of the LCD display, a burst of serial data is sent over the line 22 in the form of logical ones and zeros for storage in the shift register 20. In the present example, the logic ones represent data which signals that the associated segment is to be turned on while the logic zeros represent data indicating that the associated segment is to be turned off. The burst of serial data into the shift register 20 is controlled by the clock line 24 from the microprocessor, and at the end of the burst, a strobe command from the same microprocessor, over load line 30 causes the same data to be transferred in parallel to the latch register 26.

Each of the individual bits of the latch register 26 are connected over lines 32a-32e to EXCLUSIVE-OR gates 34a-34e respectively. The output of the EXCLUSIVE-OR gates 34a-34e are in turn connected to a corresponding segment electrode of the liquid crystal display over lines 14a-14e respectively. As is known, the purpose of the EXCLUSIVE-OR gates is to provide an apparent AC drive to the LCD 16 to prevent its eventual destruction due to the electroplating of the metallization from the backplane 38 to the segment electrodes or vice versa. This is accomplished in conventional manner by driving the backplane 38 from the square wave oscillator 36 with a frequency of typically about 50hz, and connecting the same oscillator output to the second input of each of the EXCLUSIVE-OR gates 34a-34e as shown in the drawing of Fig. 1. The result of this construction is a drive voltage to each segment which is in phase with a backplane voltage when the segment is to be off (no potential across the liquid crystal dielectric) and out of phase with the backplane drive voltage when the segment is to be on (an alternating potential across the dielectric).

In accordance with the above conventional technique, the LCD 16 can be driven under the control of microprocessor 18 to provide the appropriate display in accordance with the serial data entered at 22 and used to drive the segment electrodes through EXCLUSIVE-OR gates 34a-34e respectively. The microprocessor 18 may be employed in a similar manner to drive a plurality of LCD's 16 to form the display for use in weighing scales and similar devices and a variety of other environments. As will be appreciated, because of the ready availability of the driver circuitry in a CMOS/LSI circuit form, LCD displays can be easily and inexpensively constructed for a variety of applications without the necessity for needless complex circuitry. The drive circuitry can then be controlled by a typical microprocessor system to produce its operation in the particular environment in accordance with the format desired.

Regardless of the application of the driving circuitry 12 in conjunction with the microprocessor 18, the above circuit is subject to failures which may result in an erroneous but apparently legitimate display by the LCD device. As was previously noted, a variety of circuits have been proposed which may be used to detect a failure in connection with open connections to the LCD package itself or to an accidental short circuit which may occur from one segment to another segment or to other points in the circuitry. Such detecting techniques and systems are normally complex but are necessary so that the LCD displays in weighing scales and similar devices may conform to the weights and measures laws in many European countries. However, such circuits have heretofore not been capable of detecting the somewhat less likely possibility of malfunctions internal to the driver circuitry 12 which itself may cause individual segment drive outputs over lines 14a-14e respectively to remain in an erroneous state and thereby provide an incorrect but apparently legitimate display on the LCD 16. In particular, if one of the outputs 32a-32e of a latch register 26 fails to change state in response to the input and loading of serial data from line 22, the segment electrodes would be driven over lines 14a-14e without any indication of the error. In this instance, a conventional error detecting circuit could not detect the problem internal to the driving circuit 12 and the error would be displayed without detection.

In accordance with the present invention, the above-noted deficiencies in error detection may be overcome by modifying the programming of the microprocessor system 18 and providing an additional control output over line 42 and an additional EXCLUSIVE-OR gate 40 as shown in Fig. 2. In this instance, the square wave output from square wave generator 36 is coupled as the second input to each of the EXCLUSIVE-OR gates 34a-34e of the driving circuit 12 in the same manner as was described with respect to Fig. 1. The square wave output from 36 is also coupled as one input to the EXCLUSIVE-OR gate 40 which in turn has its output coupled to drive the backplane 38 of the LCD 16. A second input of the EXCLUSIVE-OR gate 40 is provided over line 42 as a control input from the microprocessor 18. The programming of the microprocessor system 18 is then altered such that it sends the data on the serial data line 22 to the shift register 20 in inverted form during every other data burst (display update) to cause a cyclic inversion of the data in shift register 20. At the same time, the control signal on line 42 is regulated by the programming of the microprocessor 18 so that the control signal at 42 inverts the sense of the backplane drive signal provided as the output of EXCLUSIVE-OR gate 40 whenever the serial data input to the shift register 20 is inverted. The inversion is accomplished by providing a logic one signal from the microprocessor 18 over the control line 42 to the EXCLUSIVE-OR gate 40. Naturally, when a logic zero is provided on control line 42 the output of the EXCLUSIVE-OR gate 40 forming the drive signal for the backplane 38 is in its normal state.

In accordance with the above construction, the drive circuit 12 will thereafter operate in a cyclic manner to simultaneously invert the drive signal to the backplane 38 and the burst of serial data into the shift register 20. As long as all of the driver circuit elements of the driving circuit 12 operate properly, there will be no effect on the data displayed by the LCD 16 and the display will appear the same as with the conventional drive scheme of Fig. 1. This occurs because the inverted sense of the segment drive signals from outputs 14a-14e are reinverted by the simultaneous inversion of the signal from EXCLUSIVE-OR gate 40 driving the backplane 38 so that there is no difference in the drive of the signal electrodes from that of the conventional Fig. 1 circuit. However, if the output of a given latch circuit 32a-32e fails to change state as required by the cyclic inversion process performed on the serial data input to the shift register 20, the inversion of the signal provided to the backplane 38 will not correspond to the cyclic inversion of the data in the latch registers. The resulting drive of the effected segment electrode will cause it to blink on and off at one half of the display update rate which, using circuitry as described herein, would typically be about three times per second. The blinking will immediately make the malfunction readily apparent to someone viewing the display and thus provide a monitor for an erroneous reading caused by a failure of the drive circuitry 12.

As will be apparent, the above error detection system can be easily implemented using low cost technology in conjunction with minor modifications to the programming of the microprocessor system 18 to provide a ready indication of drive circuit failure. For weighing scales or simliar systems using microprocessor control, implementation of the above technique provides an additional check on the accuracy of the weighing system and provides an additional measure of protection for error detection in instruments, particularly those which must conform to the stringent weights and measurement laws of various European countries. The error detection system can be implemented with only minor modifications to conventional circuitry and is compatible with the AC drive necessary for LCD and similar devices.

While the invention has been described with particular reference to the configuration of the embodiment shown in Fig. 2, it is apparent that other configurations could be employed within the scope of the present invention. Obviously, many other modifications and variations are possible in light of the above teachings. It is therefore to be understood that within the scope of the appended claims, the invention may be practiced otherwise than as specifically described.

WHAT IS CLAIMED IS:

1. A display driving error detection system comprising:

a display having a backplane electrode and plurality of segment electrodes;

means for coupling an alternating drive signal to drive said backplane electrode;

means for repetitively generating bursts of digital data;

drive circuit means responsive to each burst of digital data for coupling a drive signal to each of said plurality of segment electrodes; and

means for cyclicly inverting said backplane drive signal and said digital data bursts such that said drive circuit means produces a constant display from each of said segment electrodes when the drive signal of each segment electrode corresponds to the digital data of the digital data burst and an error display of a segment electrode when a drive signal of that electrode differs from the corresponding digital data of said data burst.

2. A system of claim 1, wherein said drive circuit means comprises a shift register for receiving a plurality of bits of serial data forming said data burst, a latch register coupled to store each bit of said data burst and provide an out-put thereof, and plurality of EXCLUSIVE-OR gates each having a first input coupled to receive a different one of said bits of data and a second input coupled to receive said alternating drive signal and each EXCLUSIVE-OR gate having an output coupled to one of said plurality of segment electrodes to provide the drive signal for that electrode.

3. The system of claim 1, wherein said error display is a visually blinking display.

4.   The system of claim 2, wherein said means for coupling an alternating drive signal to said backplane comprises an EXCLUSIVE-OR gate having a first input coupled to receive an alternating drive signal, a second input coupled to receive an inverting control signal, and an output coupled to provide a drive signal to said backplane.

5.   The system of claim 4, wherein said means for cyclicly inverting said backplane drive signal and said digital data burst comprises a microprocessor coupled to provide said inverting control signal simultaneous with the inversion of said digital data burst.

6.   In a weighing system having a scale for sensing weight, a means for providing digital data representing that weight, and a liquid crystal display having a backplane electrode and a plurality of segment electrodes responsive to said digital data for displaying said weight, the improvement comprising:
    drive circuit means for receiving said data representing the weight in data bursts and providing an output drive signal for each segment electrode;
    means for providing an alternating backplane drive signal to said backplane electrode; and
    means for cyclicly inverting said backplane drive signal and said digital data bursts such that each segment electrode produces a constant display when a segment electrode drive signal corresponds to the digital data of each burst and each segment electrode provides an error display when the drive signal of that segment electrode differs from the digital data of the burst.

7.   The system of claim 6, wherein said means for providing an alternating drive signal comprises a square wave generator.

8. The system of claim 6, wherein said error display is a visually blinking display.

9. The system of claim 7, wherein said means for inverting comprises a microprocessor coupled to provide a cyclic inverting control signal and simultaneously cyclicly invert the digital data of said data bursts and further including an EXCLUSIVE-OR gate having a first input coupled to receive said inverting signal and a second input coupled to receive a square wave signal from said square wave generator and provide an output as said drive signal to said backplane electrode.

10. The system of claim 7, wherein said drive circuit means comprises a shift register constructed and arranged to receive serial digital data of each data burst, a latch register coupled to store the digital data received by said shift register and provide outputs of that data and a plurality of EXCLUSIVE-OR gates having a first input coupled to receive a different one of the outputs of said latch register and a second input coupled to receive a square wave signal from said square wave generator and an output coupled to one of said segment electrodes to provide a segment drive signal.

11. An LCD drive and error detection circuit comprising:

a liquid crystal display having a backplane electrode and a plurality of segment electrodes for forming the visual displays;

means for serially providing a plurality of digital bits as a data burst;

means for generating a clock signal;

means for generating a load signal;

means for generating a square wave signal;

means for generating a control signal;

an EXCLUSIVE-OR gate having a first input coupled to receive said control signal, a second input coupled to receive said square wave signal and an output coupled to provide a drive signal to said backplane electrode;

drive circuit means for providing a drive signal to each segment electrode in response to said serial digital data burst including a shift register responsive to said clock signal for receiving said plurality of digital bits for each data burst, a latch register responsive to said load signal for storing each digital bit for each data burst and providing and output of that digital bit, and a plurality of EXCLUSIVE-OR gates each having a first input coupled to receive a different one of the outputs of the digital bits of said latch register, a second input coupled to receive said square wave signal and an output coupled to provide a drive signal to one of said segment electrodes; and

means coupled to cyclicly invert said control signal and the digital bits of alternate data bursts such that the drive signals to each segment electrode and to the backplane electrode cause a segment electrode to provide a constant visual output when the first input to the EXCLUSIVE-OR gate having an output driving that electrode is the same as its corresponding digital bit in said data burst and cause of segment electrode to provide a visually blinking display when the first input to the EXCLUSIVE-OR gate having an output driving that electrode is different from the corresponding digital bit in said data burst.

12. The system of the claim 11, wherein said means for cyclicly inverting said control signal and data bursts comprises a microprocessor.

13. The system of the previous claim wherein said means for providing said serial digital bits comprises means for providing serial digital bits representing weight.

FIG 1

FIG 2